# EUROPEAN PATENT SPECIFICATION

(11) **EP 1 894 345 B1**
(45) Date of publication and mention of the grant of the patent: **08.09.2010**
(21) Application number: 06773854.2
(22) Date of filing: 23.06.2006
(51) Int. Cl.: H04L 12/14

(54) **IMS GATEWAY SYSTEMS AND METHODS THAT VALIDATE ROUTING TO ONLINE CHARGING SYSTEMS**
IMS-GATEWAY-SYSTEME UND -VERFAHREN ZUR ÜBERPRÜFUNG DES ROUTINGS AUF ONLINE-ABRECHNUNGSSYSTEME
SYSTEMES DE PASSERELLE IMS ET PROCEDES POUR VALIDER LE ROUTAGE VERS DES SYSTEMES DE FACTURATION EN LIGNE

(30) Priority: 24.06.2005 CN 200510079122; 27.07.2005 US 190702
(43) Date of publication of application: 05.03.2008
(73) Proprietor: LUCENT TECHNOLOGIES INC., Murray Hill NJ 07974-0636 (US)
(72) Inventor: CAI, Yigang, Naperville Will IL 60564 (US); PEI, Ke, Ping District Beijing 102208 (CN); SU, Jie 21-211 Beijing Quin, Chaoyang District Beijing 100012 (CN); XING, Guang, Rong, Haidian District Beijing 100096 (CN); ZHAO, Jay, Z., 159 Chaoyang District Beijing 100103 (CN)
(74) Representative: Cockayne, Gillian
(86) International application number: PCT/US2006/024509
(87) International publication number: WO 2007/002421

(56) References cited:
- WO-A-2004/073344
- "All-IP Core Network Multimedia Domain, IP Multimedia Subsystem ? Accounting Architecture" PN-4935.7 TO BE PUBLISHED AS TIA-873.7, [Online] December 2003 (2003-12), pages 1-11, XP002403541 Retrieved from the Internet: URL:http://ftp.tiaonline.org/tr-45/tr452/P ublic/PN-3-4935.007_X.P0013.007_IMS_Chargi ng_Architecture/Old_versions/PN-3-4935-07% 20MMD%20Accounting%20Architecture.pdf> [retrieved on 2006-10-17]
- "3rd Generation Partnership Project" ETSI STANDARDS, EUROPEAN TELECOMMUNICATIONS STANDARDS INSTITUTE, SOPHIA-ANTIPO, FR, vol. 3-SA, no. V600, September 2004 (2004-09), XP014022018 ISSN: 0000-0001

## Description

### Background of the Invention

### 1. Field of the Invention

The invention is related to the field of communications, and in particular, to IMS gateway systems and methods that validate routing to online charging systems (OCS) so that charging information for a call session are routed to the correct OCS.

### 2. Statement of the Problem

As set forth in the 3^{rd} Generation Partnership Project (3GPP), an IP Multimedia Subsystem (IMS) provides a common core network having access-agnostic network architecture for converged networks. Service providers are accepting this architecture in next generation network evolution. The IMS architecture is initially defined by the 3GPP to provide multimedia services to mobile subscribers over an IP network. IP networks have become the most cost savings bearer network to transmit video, voice, and data. IMS uses the advantage of IP networks to provide multimedia services for IMS subscribers on an IMS platform. The signaling used within IMS networks is SIP protocol. IMS defines the standard SIP interface between application servers, the IMS core network (CSCF, the IMS subscriber, the IMS database (HSS), and IMS billing elements. These standards can reduce the network integration costs and let the subscriber enjoy more stable services.

On the IMS platform, the traditional supplementary services, such as call forwarding, conferencing, and call waiting could be available for IMS subscribers. Also, many new data services, such as instant messaging, video calls, video on wait, and web-based services, will also be available for the IMS subscribers.
Providing efficient IMS online charging for operator revenue generation is important to the successful deployment of IMS networks. Several 3GPP technical specifications describe online charging for IMS networks. For instance, the 3GPP TS 32.200 specification describes an online charging system (OCS) having a session-based charging function. The OCS is coupled to a call session control function (CSCF) through an IMS service control (ISC) interface. A similar architecture is shown in "All-IP Core Network Multimedia Domain, IP Multimedia Subsystem? Accounting Architecture" PN-4935.7 to be published as TIA-873.7, [online] December 2003 (2003-12), pages 1-11, XP002403541. The CSCF controls a call session for a calling party or a called party and needs to communicate with the OCS over the ISC interface to provide online charging for the call session. However, an ISC interface is a service interface and does not support online charging. Therefore, in order to use the ISC interface between the CSCF and the OCS for online charging, additional functionality would unfortunately need to be added to the OCS.

In order to avoid overloading the OCS with additional functionality and to keep the online charging architecture consistent, the interface between the CSCF and the OCS may be changed to support online charging instead of adding functionality to the OCS. One option for an interface that supports online charging is to extend the ISC interface to allow for charging mechanisms. The ISC interface would then be both a service interface and a charging interface. Unfortunately, using the ISC interface as a hybrid service/charging interface may not be acceptable for standardization desired by the 3GPP.

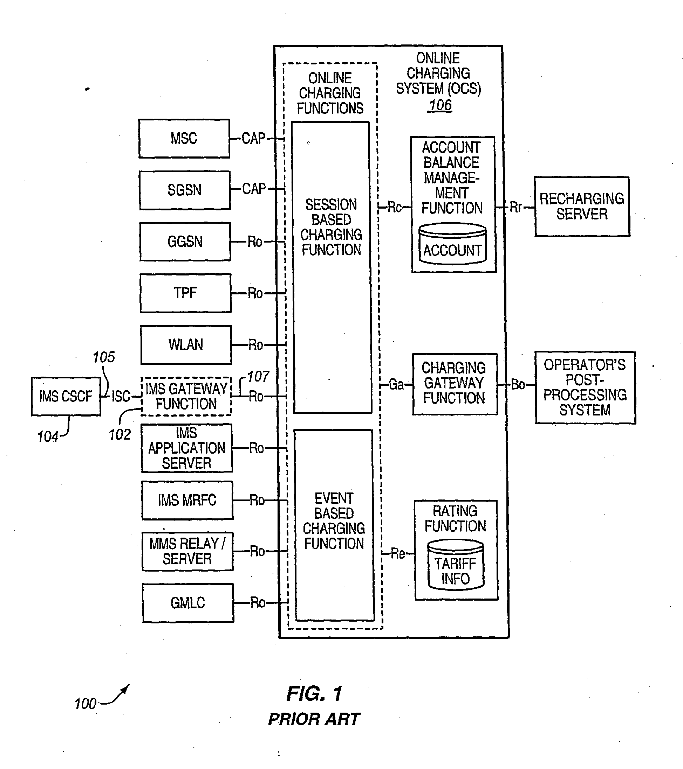

Another option is to use the Ro interface instead of the ISC interface because the Ro interface already supports online charging. The 3GPP TS 32.296 specification suggests using the Ro interface for online charging by introducing an IMS gateway function that acts as a gateway between the CSCF and the OCS. FIG. 1 illustrates the 3GPP online charging architecture 100 including the IMS gateway function 102. The IMS gateway function 102 as suggested in the 3GPP TS 32.296 specification communicates with the CSCF 104 over the ISC interface 105 and communicates with the OCS 106 over the Ro interface 107.

Unfortunately, the 3GPP TS 32.296 specification and the other 3GPP specifications do not describe how to use the IMS gateway function 102 for online charging. For instance, the specifications do not define how the IMS gateway function 102 is to operate to provide online charging. The specifications also do not resolve how the ISC interface 105, the Ro interface 107, and the CSCF 104 would function together. For instance, the specifications state that whether the CSCF 104 is directly connected to the OCS 106 via a gateway (IMS gateway function) is beyond the scope of the standardization. The physical position of the IMS gateway function 102 is in confusion in the specifications.

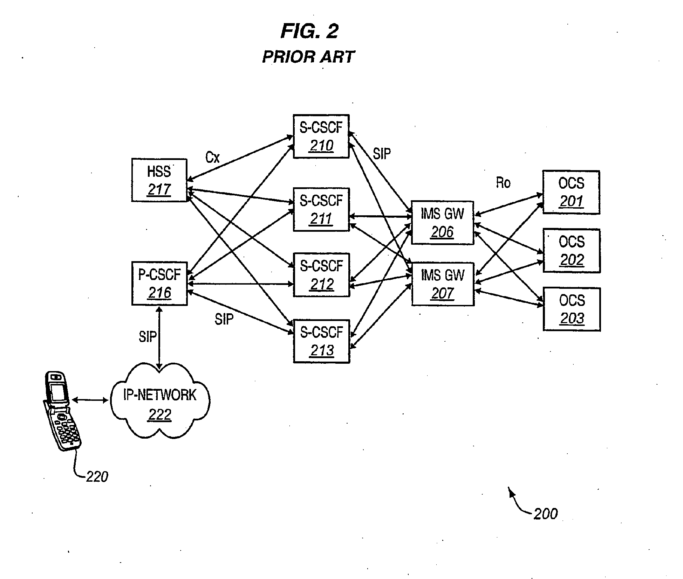

In addition, in one operator's network there could be multiple OCSs 106. FIG. 2 illustrates an online charging architecture 200 with multiple OCSs 201-203. Online charging architecture 200 also includes IMS gateways 206-207, Serving-CSCFs (S-CSCF) 210-213, Proxy-CSCF (P-CSCF) 216, and Home Subscriber Server (HSS) 217. P-CSCF 216 communicates with a Mobile Station 220 over IP network 222. Each of the OCSs 201-203 has a subscriber database for the subscriber Account Balance Management Function (ABMF). IMS gateways 206-207 receive online charging information from S-CSCFs 210-213, and route the online charging information to the appropriate OCS 201-203 that has the calling/called party's account. An OCS routing address is included in the CSCF SIP INVITE message to the IMS gateway 206-207. The IMS gateway 206-207 uses the OCS routing address to route the online charging information (with Diameter Ro interface) to the OCS 201-203.

Provisioning of the OCS routing address for each IMS subscriber can be done at HSS 217. 3GPP TS 29.228 and 29.229 define HSS charging information to be provisioned for each subscriber in HSS 217. For online charging, each subscriber will have two OCS routing addresses provisioned as the Primary Event Charging Function Name and the Secondary Event Charging Function Name, which are mapped to primary and secondary OCSs 201-203. The primary and secondary OCSs 201-203 have this subscriber's account balance.

One problem is that the 3GPP standards definition in above specifications are not sufficient to guarantee that the OCS routing address is included in SIP messages sent to the IMS gateways 206-207 for online charging. There may be instances when the IMS gateways 206-207 receive SIP INVITE messages from S-CSCFs 210-213 without an OCS routing address or with an incorrect OCS routing address. If they receive no or an incorrect OCS routing address, then IMS gateways 206-207 need to search for OCS mapping for the IMS subscriber to route the call. There is no definition in the 3GPP and other standards on how an IMS gateway can search for OCS mapping for an IMS subscriber. There is also no definition in the 3GPP on how to validate an OCS routing address that is provided in the INVITE message.

There are many possible cases that SIP messages transmitted to IMS gateways 206-207 will not include an OCS routing address or the OCS routing address is not valid. First, HSS 217 has subscriber charging information provisioned but not correct. Second, HSS 217 has no subscriber charging information provisioned because it is optional. Third, HSS 217 has subscriber charging information provisioned but there is no charging function name and IP address mapping provisioned at the S-CSCF 210-213. Fourth, HSS 217 has subscriber charging information provisioned but S-CSCF/HSS cannot determine whether the call is an online or an offline call. The S-CSCF 210-213 may consider it an online call and route the SIP message to the IMS gateway 206-207 first. The IMS gateway 206-207 must figure out where to route the call. Fifth, a legacy subscriber has no registration data at HSS 217. The IMS call from/to legacy subscribers has no charging information mapped to the correct OCS 201-203.

It would be desirable to increase the effectiveness of OCS routing for online IMS call sessions.

### Summary of the Solution

The invention solves the above and other related problems by defining systems and methods that validate routing information for routing charging information to online charging systems (OCS) in an IMS network. In an IMS network, an IMS gateway system is provisioned with one or more OCS routing addresses for the subscribers of the IMS network. The provisioned OCS routing addresses are used in the IMS gateway system to validate OCS routing addresses received from a call session control function (CSCF) in messages. By validating the OCS routing addresses in the messages, the IMS gateway system advantageously routes charging information for calls to the correct or appropriate OCS.

One embodiment of the invention comprises an IMS gateway system that is coupled to a CSCF and a plurality of OCSs to provide online charging. The IMS gateway system includes a first interface for communicating with the CSCF, a second interface for communicating with the OCS, a call control system, and a subscriber database. When in operation, the call control system receives a message from the CSCF for a call session through the first interface. The call session may be already established or may be initiated by the message. The message may comprise a SIP message, such as a SIP INVITE message, or a message of another protocol. The call control system identifies an OCS routing address from the message, if an OCS routing address is included in the message. The call control system also identifies a corresponding OCS routing address from the subscriber database, if an OCS routing address is included in the subscriber database. The call control system compares the OCS routing address from the message with the OCS routing address from the subscriber database. If the OCS routing address from the message matches the OCS routing address from the subscriber database, then the call control system validates the OCS routing address from the message and/or the subscriber database. The call control system then transmits a charging request to the appropriate OCS based on the validated OCS routing address. If the OCS routing address from the message does not match the OCS routing address from the subscriber database, then the call control system transmits a charging request to the appropriate OCS based on the OCS routing address from the subscriber database.

The invention may include other exemplary embodiments described below.

### Description of the Drawings

The same reference number represents the same element on all drawings.
FIG. 1 illustrates the 3GPP online charging architecture including the IMS gateway function in the prior art.
FIG. 2 illustrates an online charging architecture with multiple online charging systems in the prior art.
FIG. 3 illustrates an IP Multimedia Subsystem (IMS) network in an exemplary embodiment of the invention.
FIG. 4 is a flow chart illustrating a method of operating an IMS gateway system in an exemplary embodiment of the invention.
FIG. 5 illustrates a method of operating the IMS gateway system if a subscriber database does not include an OCS routing address in an exemplary embodiment of the invention.
FIG. 6 illustrates a method of operating the IMS gateway system if a message from a CSCF does not include an OCS routing address in an exemplary embodiment of the invention.
FIG. 7 illustrates a method of operating the IMS gateway system if neither a subscriber database nor a message from a CSCF includes an OCS routing address in an exemplary embodiment of the invention.
FIG. 8 illustrates a call flow in a communication network in an exemplary embodiment of the invention.

### Detailed Description of the Invention

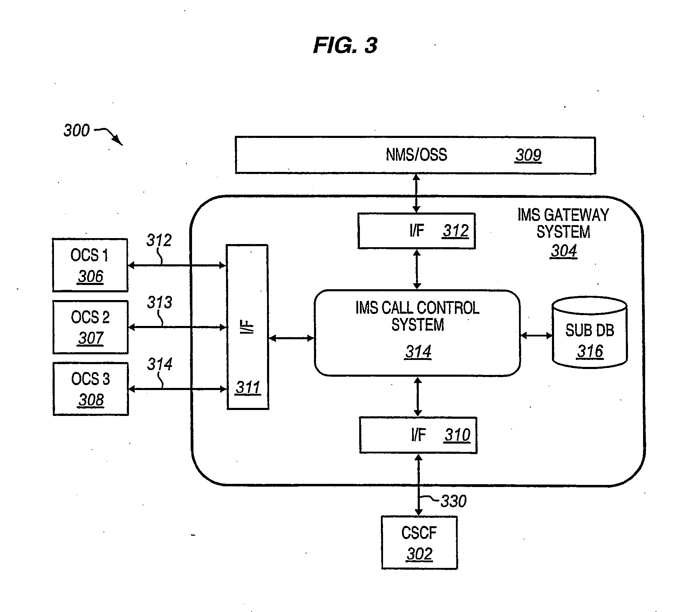

FIGS. 3-8 and the following description depict specific exemplary embodiments of the invention to teach those skilled in the art how to make and use the best mode of the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

FIG. 3 illustrates an IP Multimedia Subsystem (IMS) network 300 in an exemplary embodiment of the invention. IMS network 300 includes a call session control function (CSCF) 302, an IMS gateway system 304, a plurality of online charging systems (OCS) 306-308, and a network management system (NMS)/Operations Support System (OSS) 309. IMS gateway system 304 includes an interface 310 for communicating with CSCF 302, an interface 311 for communicating with OCSs 306-308, an interface 312 for communicating with NMS/OSS 309, a call control system 314, and a subscriber database 316. Interface 310 is coupled to CSCF 110 over a link 330 and communicates according to a protocol, such as the IMS service control (ISC) protocol. Interface 311 is coupled to OCSs 306-308 over links 312-314 and communicates according to a protocol, such as the Ro protocol. IMS network 300 may include other components, devices, or systems not shown in FIG. 3.

Subscriber database 316 is provisioned with a plurality of entries for a plurality of subscribers to the IMS network 300 or other services. Subscriber database 316 may be pre-provisioned or subscriber database 316 may be updated periodically. An entry for a subscriber includes at least one OCS routing address mapped to the subscriber. For instance, each subscriber may have two OCS routing addresses provisioned as the Primary Event Charging Function Name and the Secondary Event Charging Function Name, which are mapped to a primary OCS and a secondary OCS where the subscriber's prepaid account balance resides. Subscriber database 316 may be indexed by a subscriber identifier (ID), a name, or some other indication of the subscriber. Subscriber database 316 may be dynamically synced up by NMS/OSS 309.

Subscriber database 316 may include all mapping information for subscribers from IMS, packet, and circuit domains. Thus, IMS gateway system 304 may route IMS calls for even legacy (both wireless and wireline) subscribers. Subscriber database 316 may also have a function to convert a point code routing address (which is used in SS7 signalling) to an IP address of one of the OCSs 306-308 in IMS network 300.

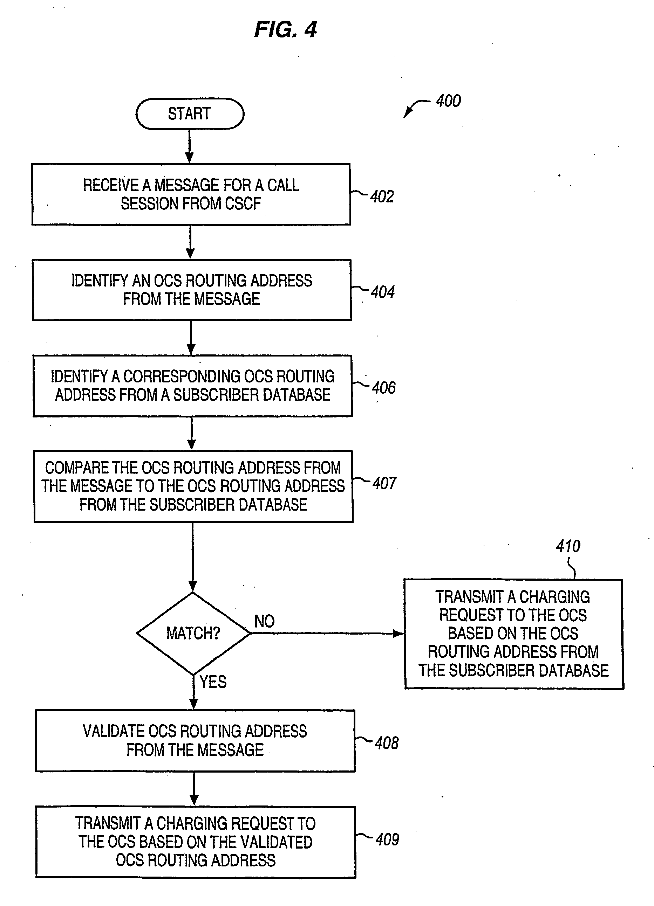

IMS gateway system 304 and the following description defines how online charging may be accomplished in an IMS network 300. As a brief overview, IMS gateway system 304 in FIG. 3 is configured to receive messages from CSCF 302 regarding a call session. Based on these messages, IMS gateway system 304 determines whether to contact an OCS 306-308 regarding online charging for the call session. IMS gateway system 304 also determines which OCS or OCSs 306-308 to contact regarding the call session. The operation of IMS gateway system 304 is more particularly described in the FIG. 4 and the following description to show how IMS gateway system 304 determines which OCS or OCSs 306-308 to contact.

FIG. 4 is a flow chart illustrating a method 400 of operating IMS gateway system 304 in an exemplary embodiment of the invention. In step 402, call control system 314 receives a message from CSCF 302 for a call session through interface 310. The call session may be already established or may be initiated by the message. The message may comprise a SIP message, such as a SIP INVITE message, or a message of another protocol. In step 404, call control system 314 identifies an OCS routing address from the message, if an OCS routing address is included in the message. In step 406, call control system 314 identifies a corresponding OCS routing address from subscriber database 316, if an OCS routing address is included in the subscriber database 316. To identify a corresponding OCS routing address, call control system 314 may identify a subscriber ID in the message. Call control system 314 may then use the subscriber ID to access the subscriber database 316. Subscriber database 316 may look up an entry for the subscriber ID to identify one or more OCS routing addresses associated with that subscriber ID. Subscriber database 316 may then return one or more OCS routing addresses to call control system 314.

In step 407, call control system 314 compares the OCS routing address from the message to the OCS routing address from subscriber database 316. If the OCS routing address from the message matches the OCS routing address from subscriber database 316, then the call control system 314 validates the OCS routing address from the message and/or the subscriber database 316 in step 408. To match in this embodiment means that the two routing addresses include information that points to the same OCS. One or both of the OCS routing address may be encrypted or otherwise altered so that the two OCS routing addresses are not exactly the same. However, the two OCS routing address will point to the same OCS if they match. Call control system 314 then transmits a charging request to the appropriate OCS 306-308 based on the validated OCS routing address in step 409.

If the OCS routing address from the message does not match the OCS routing address from subscriber database 316, then the call control system 314 transmits a charging request to the appropriate OCS 306-308 based on the OCS routing address from the subscriber database 316 in step 410. Call control system 314 may also update the OCS routing address in the message which loops back to CSCF 302. Call control system 314 may also query NMS/OSS 309 for the most updated OCS routing address, and update subscriber database 316 with the updated OCS routing address.

Alternatively, call control system 314 may query NMS/OSS 309 for the most updated OCS routing address before transmitting the charging request. Call control system 314 may then transmit the charging request to the appropriate OCS 306-308 based on the updated OCS routing address provided by NMS/OSS 309.

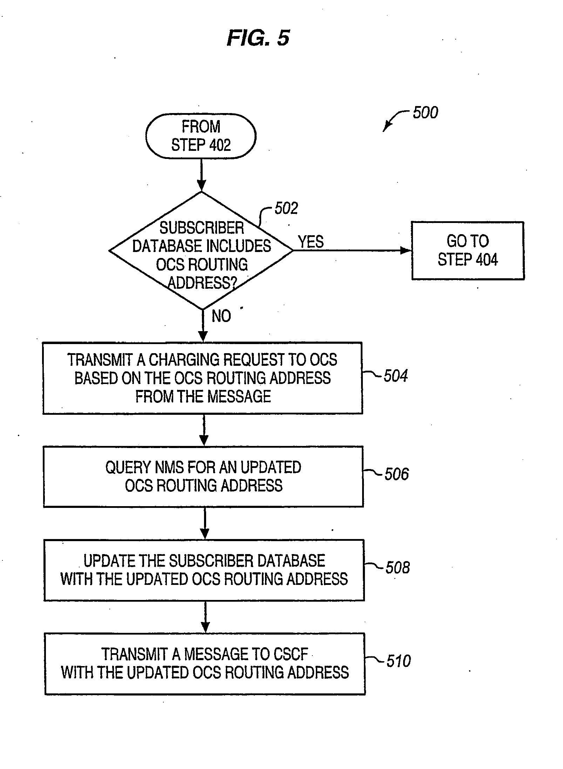

FIG. 5 illustrates a method 500 of operating IMS gateway system 304 if subscriber database 316 does not include an OCS routing address in an exemplary embodiment of the invention. If subscriber database 316 does not include an OCS routing address in step 502, then call control system 314 transmits a charging request to the appropriate OCS 306-308 based on the OCS routing address from the message in step 504. Call control system 314 queries NMS/OSS 309 for the most updated OCS routing address in step 506. Call control system 314 updates subscriber database 316 with the updated OCS routing address in step 508. Call control system 314 transmits a message to CSCF 302 with the updated OCS routing address in step 510.

Alternatively, call control system 314 may query NMS/OSS 309 for the most updated OCS routing address before transmitting the charging request. Call control system 314 may then transmit the charging request to the appropriate OCS 306-308 based on the updated OCS routing address provided by NMS/OSS 309.

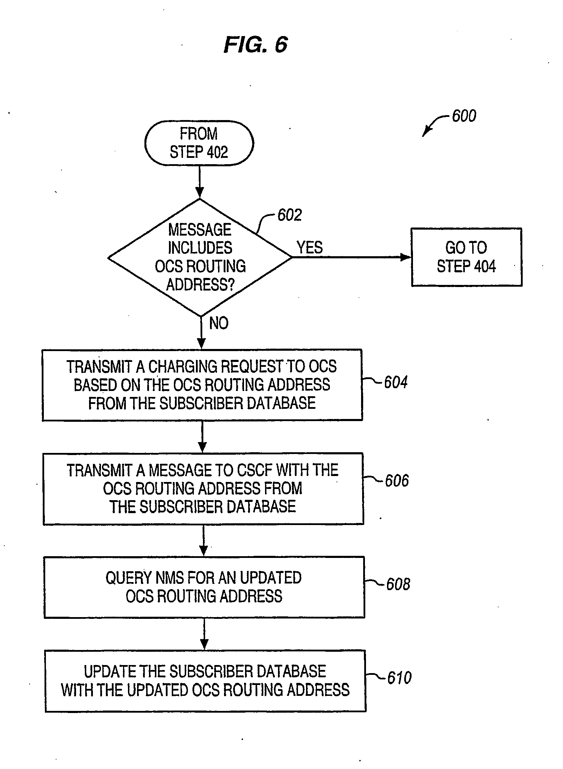

FIG. 6 illustrates a method 600 of operating IMS gateway system 304 if the message from CSCF 302 does not include an OCS routing address in an exemplary embodiment of the invention. If the message does not include an OCS routing address in step 602, then call control system 314 transmits a charging request to the appropriate OCS 306-308 based on the OCS routing address from the subscriber database 316 in step 604. Call control system 314 updates the OCS routing address in the message which loops back to CSCF 302 in step 606. Call control system 314 queries NMS/OSS 309 for the most updated OCS routing address in step 608. Call control system 314 updates subscriber database 316 with the updated OCS routing address in step 610.

Alternatively, call control system 314 may query NMS/OSS 309 for the most updated OCS routing address before transmitting the charging request. Call control system 314 may then transmit the charging request to the appropriate OCS 306-308 based on the updated OCS routing address provided by NMS/OSS 309.

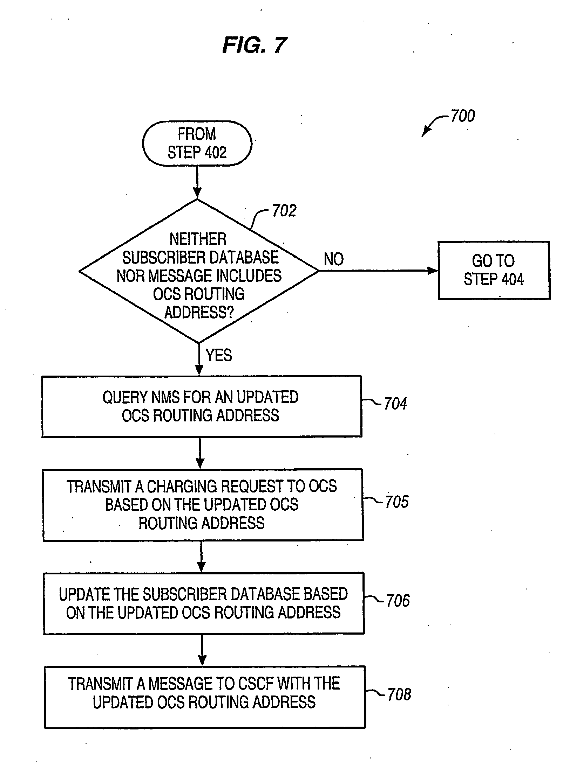

FIG. 7 illustrates a method 700 of operating IMS gateway system 304 if neither the subscriber database 316 nor the message from CSCF 302 includes an OCS routing address in an exemplary embodiment of the invention. If neither the subscriber database 316 nor the message from CSCF 302 includes an OCS routing address in step 702, then call control system 314 queries NMS/OSS 309 for the most updated OCS routing address in step 704. Call control system 314 transmits a charging request to the appropriate OCS 306-308 based on the updated OCS routing address in step 705. Call control system 314 updates subscriber database 316 with the updated OCS routing address in step 706. Call control system 314 also updates CSCF 302 with the updated OCS routing address in step 708 by looping back the message that includes the updated OCS routing address.

In any of FIGS. 3-7, if call control system 314 transmits a charging request to one of the OCSs 306-308 with subscriber information and the OCS 306-308 determines that no subscriber account exists, then the OCS 306-308 returns an error message to call control system 314. Call control system 314 queries NMS/OSS 309 for the most updated OCS routing address. Call control system 314 then transmits (as a re-try) the charging request to the appropriate OCS 306-308 indicated in the updated OCS routing address. Call control system 314 also updates subscriber database 316 with the updated OCS routing address. Call control system 314 also updates CSCF 302 with the updated OCS routing address by transmitting a message with the updated OCS routing address. If the re-try with the updated OCS routing address fails, then call control system 314 transmits an error message to CSCF 302 indicating the charging information error. CSCF 302 may then tear down the call.

Subscriber database 316 may also include subscriber online/offfine charging information. Asssume a subscriber has an offline charging account with the service provider but has no online charging account. The CSCF 302 routes the message to IMS gateway system 304 when the CSCF 302 has no subscriber account data whether the call is for online or offline charging. IMS gateway system 304 will not route the call to an OCS 306-308 because IMS gateway system 304 routes online charging messages to the OCS, not offline charging messages. IMS gateway system 304 may return an error message to CSCF 302 with offline charging information included in the message, so that CSCF 302 will redirect the call to the offline charging system (not shown).

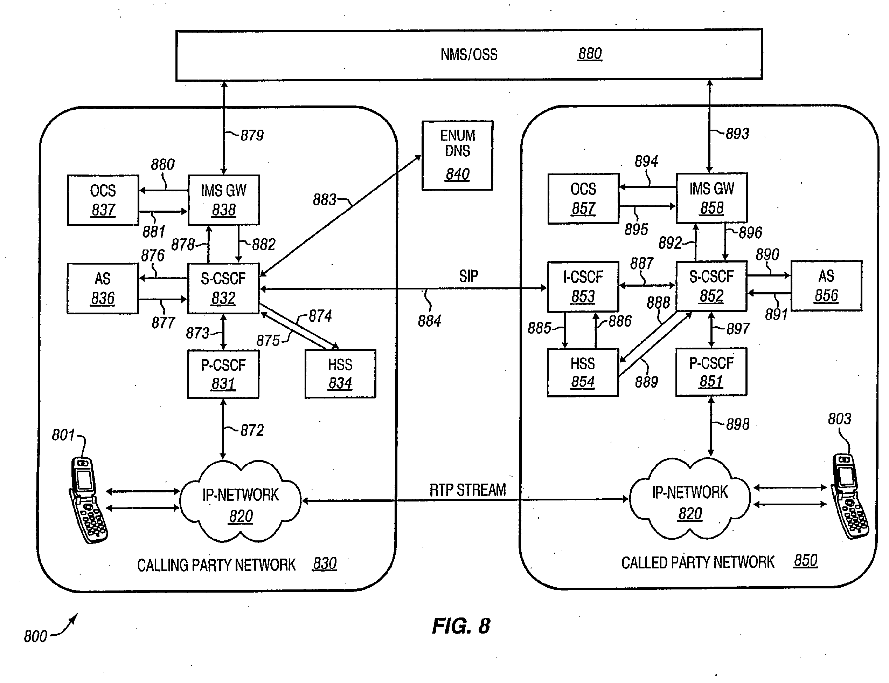

FIG. 8 illustrates a call flow in a communication network 800 in an exemplary embodiment of the invention. Communication network 800 includes an IP network 820, calling party network 830, called party network 850, telephone numbering mapping (ENUM)/domain name server (DNS) database 840, and Network Management System (NMS)/Operations Support System (OSS) 880. Calling party network 830 includes a Proxy-Call Server Control Function (P-CSCF) 831, a Serving-CSCF (S-CSCF) 832, a Home Subscriber Server (HSS) 834, one or more Application Servers (AS) 836, Online Charging System (OCS) 837, and IMS gateway system (IMS GW) 838. Called party network 850 includes an Interrogate-CSCF (I-CSCF) 853, an S-CSCF 852, a P-CSCF 851, an HSS 854, one or more Application Servers (AS) 856, Online Charging System (OCS) 857, and IMS gateway system (IMS GW) 858. Communication network 800 may include other systems, servers, and networks not shown in FIG. 8.

For this embodiment, a calling party 801 dials a number for a called party 803 to place a call (such as an event-based call) to called party 803 over IP network 820. Assume that both calling party 801 and called party 803 are IMS subscribers. IP network 820 routes the call to P-CSCF 831 by transmitting a SIP INVITE message (arrow 872) to P-CSCF 831. P-CSCF 831 transmits the INVITE message to S-CSCF 832 (arrow 873).

S-CSCF 832 checks the INVITE message header to determine if the service profile for calling party 801 is already downloaded from HSS 834. If the service profile for calling party 801 is already downloaded from HSS 834, then S-CSCF 832 uses that service profile. If the service profile is not already downloaded, then S-CSCF 832 downloads the service profile for calling party 801 from HSS 834 by transmitting a service assignment request (SAR) message to HSS 834 (arrow 874). HSS 834 returns a service assignment answer (SAA) message that includes the IMS service profile for calling party 801 (arrow 875). S-CSCF 832 stores the service profile data for calling party 801 locally. For the performance consideration, the service profile may be kept for a while. If no more calls are made from the same subscriber after a pre-defined period of time, S-CSCF 832 clears the data and downloads the data again if the subscriber makes a new call. S-CSCF 832 processes the service profile for calling party 801.

The service profile indicates charging information for calling party 801, such as an OCS routing address or an offline charging service node address. Assume calling party 801 has a prepaid account with the service provider and the call is considered an online charging call. The OCS routing address in the service profile is used to route the call for online charging purposes.

S-CSCF 832 further processes the service profile for calling party 801 to decide if it needs to trigger AS 836. If S-CSCF 832 determines that an AS 836 is needed, then S-CSCF 832 transmits the INVITE message to the AS 836 (arrow 876). AS 836 goes through the service of calling party 801, and returns the INVITE message back to S-CSCF 832 (arrow 877).

Because there is online charging for this call, S-CSCF 832 needs to transmit a charging request to OCS 837. S-CSCF 832 may or may not have the OCS routing address for OCS 837. S-CSCF 832 does have the IP address of IMS gateway system 838, so S-CSCF 832 transmits the INVITE message to IMS gateway system 838 (arrow 878). If S-CSCF 832 has the OCS charging information name, then it converts the OCS charging information name into an OCS routing address and transmits the OCS routing address in the INVITE message.

IMS gateway system 838 compares the OCS routing address from the INVITE message to a corresponding OCS routing address stored in a subscriber database within IMS gateway system 83 8. If the OCS routing address is missing or there is not a match, then IMS gateway system 838 queries NMS/OSS 880 to download the most updated OCS routing address (arrow 879) and updates the subscriber database within IMS gateway system 838. The updated OCS routing address is used to contact the correct OCS 837. If the two OCS routing addresses match, then IMS gateway system 838 validates the OCS routing address from the message, and transmits a charging request to the appropriate OCS 837 based on the validated OCS routing address.

IMS gateway system 838 transmits a Credit Control Request (CCR) message of Diameter Ro interface to the appropriate OCS 837 for online charging (arrow 880) based on the validated OCS routing address. OCS 837 validates the prepaid account balance for calling party 801. If there is a sufficient balance in the prepaid account for calling party 801, then OCS 837 grants the call and transmits a Credit Control Answer (CCA) message of Diameter Ro interface back to IMS gateway system 838 (arrow 881). OCS 837 deducts the call cost from the prepaid account for calling party 801. IMS gateway system 838 transmits the INVITE message with OCS 837 approval to S-CSCF 832 (arrow 882).

S-CSCF 832 queries the ENUM database 840 with the E164 number of the called party 803 to get the called party's URL address (arrow 883). S-CSCF 832 then transmits the INVITE message to a pre-arranged I-CSCF 853 based on the URL (arrow 884). I-CSCF 853 transmits a Location Information Request (LIR) message for the called party 803 to HSS 854 (arrow 885). HSS 854 returns a Location Information Answer (LIA) message to I-CSCF 853 (arrow 886).

If I-CSCF 853 gets back an LIA message from HSS 854, then I-CSCF 853 transmits the call to S-CSCF 852 (arrow 887). When the terminating S-CSCF 852 receives the INVITE message, terminating S-CSCF 852 checks the INVITE message header to see if the called party 803 is an IMS subscriber. If the service profile for called party 803 is already downloaded from HSS 854, then S-CSCF 852 uses that service profile. Otherwise, S-CSCF 852 downloads the service profile for called party 803 from HSS 854 using a SAR message (arrow 888). HSS 854 returns an SAA message that includes the service profile for called party 803 (arrow 889). S-CSCF 852 stores the service profile for called party 803 locally. For performance consideration, the service profile may be kept for a while. If no more calls are made from the same subscriber after a pre-defined period of time, S-CSCF 852 clears the data and downloads the data again if the subscriber makes a new call. S-CSCF 852 processes the service profile for called party 803.

The service profile for called party 803 indicates charging information, such as an OCS routing address or an offline charging service node address. Assume called party 803 also has a prepaid account with the service provider and the call is considered an online charging call. The OCS routing address is used to route the call for online charging purposes.

Terminating S-CSCF 852 further processes the service profile of called party 803 to decide if it needs to trigger AS 856. If S-CSCF 852 determines a need for AS 856, then S-CSCF 852 transmits the INVITE message to the AS 856 (arrow 890). AS 856 goes through the terminating service of called party 803 and returns the INVITE message back to terminating S-CSCF 852 (arrow 891).

Because there is online charging for this call, S-CSCF 852 needs to transmit a charging request to OCS 857. S-CSCF 852 may or may not have the OCS routing address for OCS 857. S-CSCF 852 does have the IP address of IMS gateway system 858, so S-CSCF 852 transmits the INVITE message to IMS gateway system 858 (arrow 892). If S-CSCF 852 has the OCS charging information name, then it converts the OCS charging information name into an OCS routing address and transmits the OCS routing address in the INVITE message.

IMS gateway system 858 compares the OCS routing address from the INVITE message to a corresponding OCS routing address stored in a subscriber database within IMS gateway system 858. If the OCS routing address is missing or there is not a match, then IMS gateway system 858 queries NMS/OSS 880 to download the most updated OCS routing address (arrow 893) and updates the subscriber database within IMS gateway system 858. The updated OCS routing address is used to contact the correct OCS 857. If the two OCS routing addresses match, then IMS gateway system 858 validates the OCS routing address from the message, and transmits a charging request to the appropriate OCS 857 based on the validated OCS routing address.

IMS gateway system 858 transmits a Credit Control Request (CCR) message of Diameter Ro interface to OCS 857 for online charging (arrow 894) based on the validated OCS routing address. OCS 857 validates the prepaid account balance for called party 803. If there is a sufficient balance in the prepaid account for called party 803, then OCS 857 grants the call and transmits a Credit Control Answer (CCA) message of Diameter Ro interface back to IMS gateway system 858 (arrow 895). OCS 857 deducts the call cost from the prepaid account for called party 803. IMS gateway system 858 transmits the INVITE message with OCS 857 approval to S-CSCF 852 (arrow 896).

Terminating S-CSCF 852 then transmits the INVITE message to P-CSCF 851 of called party 803 (arrow 897). P-CSCF 851 transmits the INVITE message to IP network 820 to connect the call to called party 803 (arrow 898).

## Claims

1. An IP Multimedia Subsystem, IMS, gateway system (304) for providing online charging in an IMS network, the IMS gateway system comprising:
a first interface (310) for communicating with a call session control function, CSCF, (302);
a second interface (311) for communicating with an online charging system, OCS, (306-308);
a subscriber database (316) provisioned with a plurality of entries having at least one OCS routing address mapped to a subscriber; and
a call control system (314) coupled to the first interface, the second interface, and the subscriber database, the call control system is operable to receive a message for a call session through the first interface from the CSCF, and to identify an OCS routing address and a subscriber ID from the message,
the IMS gateway system (304) **characterized in that:**
the call control system is further operable to identify a corresponding OCS routing address from the subscriber database, to compare the OCS routing address from the message with the OCS routing address from the subscriber database, to validate the OCS routing address from the message if the OCS routing address from the message matches the OCS routing address from the subscriber database, and to transmit a charging request to the OCS through the second interface based on the validated OCS routing address.

2. The IMS gateway system (304) of claim 1 wherein if the OCS routing address in the message does not match the OCS routing address in the subscriber database, then the call control system (314) is operable to:
transmit the charging request to the OCS (306-308) based on the OCS routing address from the subscriber database (316).

3. The IMS gateway system (304) of claim 1 wherein if the subscriber database (316) does not include a corresponding OCS routing address, then the call control system (314) is operable to:
transmit the charging request to the OCS (306-308) through the second interface (311) based on the OCS routing address from the message.

4. The IMS gateway system (304) of claim 1 wherein if the message does not include an OCS routing address, then the call control system (314) is operable to:
transmit the charging request to the OCS (306-308) through the second interface (311) based on the OCS routing address from the subscriber database (316).

5. The IMS gateway system (304) of claim 1 wherein if neither the subscriber database (316) nor the message includes an OCS routing address, then the call control system (314) is operable to:
query a network management system (309) for an updated OCS routing address; and
transmit the charging request to the OCS (306-308) through the second interface (311) based on the updated OCS routing address.

6. A method of operating an IP Multimedia Subsystem, IMS, gateway system for providing online charging in an IMS network, the method comprising:
receiving a message for a call session from a call session control function, CSCF; and
identifying an online charging system, OCS, routing address and a subscriber ID from the message;
the method **characterized by** the steps of:
identifying a corresponding OCS routing address from a subscriber database provisioned with a plurality of entries having at least one OCS routing address mapped to a subscriber;
comparing the OCS routing address from the message with the OCS routing address from the subscriber database;
validating the OCS routing address from the message if the OCS routing address from the message matches the OCS routing address from the subscriber database; and
transmitting a charging request to an OCS based on the validated OCS routing address.

7. The method of claim 6 wherein if the OCS routing address in the message does not match the OCS routing address in the subscriber database, then the method further comprises:
transmitting the charging request to the OCS based on the OCS routing address from the subscriber database.

8. The method of claim 6 wherein if the subscriber database does not include a corresponding OCS routing address, then the method further comprises:
transmitting the charging request to the OCS based on the OCS routing address from the message.

9. The method of claim 6 wherein if the message does not include an OCS routing address, then the method further comprises:
transmitting the charging request to the OCS based on the OCS routing address from the subscriber database.

10. The method of claim 6 wherein if neither the subscriber database nor the message includes an OCS routing address, then the method further comprises:
querying a network management system for an updated OCS routing address; and transmitting the charging request to the OCS based on the updated OCS routing address.

## Patentansprüche

1. Ein Gateway-System (304) für ein IP-Multimedia-Subsystem, IMS, zum Bereitstellen einer Online-Abrechnung in einem IMS-Netzwerk, wobei das IMS-Gateway-System umfasst:
Eine erste Schnittstelle (310) für die Kommunikation mit einer Anrufsitzungssteuerungsfunktion, CSCF, (302);
eine zweite Schnittstelle (311) für die Kommunikation mit einem Online-Abrechnungssystem, OCS, (306-308);
eine Teilnehmer-Datenbank (316) mit einer Mehrzahl von Einträgen, mit mindestens einer auf einen Teilnehmer abgebildeten OCS-Routing-Adresse; und
ein Anrufsteuerungssystem (314), welches an die erste Schnittstelle, die zweite Schnittstelle und die Teilnehmerdatenbank gekoppelt ist, wobei das Anrufsteuerungssystem dazu ausgelegt ist, über die erste Schnittstelle eine Nachricht für eine Anrufsitzung von der CSCF zu empfangen und aufgrund der Nachricht eine OCS-Routing-Adresse und eine Teilnehmer-ID zu identifizieren,
wobei das IMS-Gateway-System (304) **dadurch gekennzeichnet ist, dass**:
Das Anrufsteuerungssystem weiterhin dazu ausgelegt ist, eine entsprechende OCS-Routing-Adresse aus der Teilnehmerdatenbank zu identifizieren, die OCS-Routing-Adresse aus der Nachricht mit der OCS-Routing-Adresse aus der Teilnehmerdatenbank zu vergleichen, die OCS-Routing-Adresse aus der Nachricht zu validieren, wenn die OCS-Routing-Adresse aus der Nachricht mit der OCS-Routing-Adresse aus der Teilnehmerdatenbank übereinstimmt, und über die zweite Schnittstelle eine Abrechnungsanforderung auf der Basis der validierten OCS-Routing-Adresse an das OCS zu senden.

2. Das IMS-Gateway-System (304) nach Anspruch 1, wobei, wenn die OCS-Routing-Adresse in der Nachricht nicht mit der OCS-Routing-Adresse in der Teilnehmerdatenbank übereinstimmt, das Anrufsteuerungssystem (314) dazu ausgelegt ist:
Die Abrechnungsanforderung auf der Basis der OCS-Adresse aus der Teilnehmerdatenbank (316) an das OCS (306-308) zu senden.

3. Das IMS-Gateway-System (304) nach Anspruch 1, wobei, wenn die Teilnehmerdatenbank (316) keine entsprechende OCS-Routing-Adresse enthält, das Anrufsteuerungssystem (314) dazu ausgelegt ist:
Die Abrechnungsanforderung auf der Basis der OCS-Routing-Adresse aus der Nachricht über die zweite Schnittstelle (311) an das OCS (306-308) zu senden.

4. Das IMS-Gateway-System (304) nach Anspruch 1, wobei, wenn die Nachricht keine OCS-Routing-Adresse enthält, das Anrufsteuerungssystem (314) dazu ausgelegt ist:
Die Abrechnungsanforderung auf der Basis der OCS-Routing-Adresse aus der Teilnehmerdatenbank (316) über die zweite Schnittstelle (311) an das OCS (306-308) zu senden.

5. Das IMS-Gateway-System (304) nach Anspruch 1, wobei, wenn weder die Teilnehmerdatenbank (316) noch die Nachricht eine OCS-Routing-Adresse enthalten, das Anrufsteuerungssystem (314) dazu ausgelegt ist:
Ein Netzwerkverwaltungssystem (309) in Bezug auf eine aktualisierte OCS-Routing-Adresse abzufragen; und
die Abrechnungsanforderung auf der Basis der aktualisierten OCS-Routing-Adresse über die zweite Schnittstelle (311) an das OCS (306-308) zu senden.

6. Ein Verfahren zum Bedienen eines Gateway-Systems eines IP-Multimedia-Subsystems, IMS, zum Bereitstellen einer Online-Abrechnung in einem IMS-Netzwerk, wobei das Verfahren umfasst:
Empfangen einer Nachricht für eine Anrufsitzung von einer Anrufsitzungssteuerungsfunktion, CSCF;
und
Identifizieren der Routing-Adresse eines Online-Abrechnungssystems, OCS, und einer Teilnehmer-ID aus der Nachricht;
wobei das Verfahren durch die folgenden Schritte **gekennzeichnet** ist:
Identifizieren der entsprechenden OCS-Routing-Adresse aus einer Teilnehmerdatenbank mit einer Mehrzahl von Einträgen, wobei mindestens eine OCS-Routing-Adresse auf einen Teilnehmer abgebildet ist;
Vergleichen der OCS-Routing-Adresse aus der Nachricht mit der OCS-Routing-Adresse aus der Teilnehmerdatenbank;
Validieren der OCS-Routing-Adresse aus der Nachricht, wenn die OCS-Routing-Adresse aus der Nachricht mit der OCS-Routing-Adresse aus der Teilnehmerdatenbank übereinstimmt; und
Übertragen einer Abrechnungsanforderung an das OCS auf der Basis der validierten OCS-Routing-Adresse.

7. Das Verfahren nach Anspruch 6, wobei, wenn die OCS-Routing-Adresse in der Nachricht nicht mit der OCS-Routing-Adresse in der Teilnehmerdatenbank übereinstimmt, das Verfahren weiterhin den folgenden Schritt umfasst:
Übertragen der Abrechnungsanforderung an das OCS auf der Basis der OCS-Routing-Adresse aus der Teilnehmerdatenbank.

8. Das Verfahren nach Anspruch 6, wobei, wenn die Teilnehmerdatenbank keine entsprechende OCS-Routing-Adresse enthält, das Verfahren weiterhin den folgenden Schritt umfasst:
Übertragen der Abrechnungsanforderung an das OCS auf der Basis der OCS-Routing-Adresse aus der Nachricht.

9. Das Verfahren nach Anspruch 6, wobei, wenn die Nachricht keine OCS-Routing-Adresse enthält, das Verfahren weiterhin den folgenden Schritt umfasst:
Übertragen der Abrechnungsanforderung an das OCS auf der Basis der OCS-Routing-Adresse aus der Teilnehmerdatenbank.

10. Das Verfahren nach Anspruch 6, wobei, wenn weder die Teilnehmerdatenbank noch die Nachricht eine OCS-Routing-Adresse enthalten, das Verfahren weiterhin den folgenden Schritt umfasst:
Abfragen eines Netzwerkverwaltungssystems in Bezug auf eine aktualisierte OCS-Routing-Adresse, und Übertragen der Abrechnungsanforderung an das OCS auf der Basis der aktualisierten OCS-Routing-Adresse.

## Revendications

1. Système de passerelle de sous-système multimédia IP, IMS, (304) pour fournir une facturation en ligne dans un réseau IMS, le système de passerelle IMS comprenant :
une première interface (310) pour communiquer avec une fonction de commande de session d'appel, CSCF, (302) ;
une deuxième interface (311) pour communiquer avec un système de facturation en ligne, OCS (306-308) ;
une base de données d'abonnés (316) dotée d'une pluralité d'entrées ayant au moins une adresse de routage OCS correspondant à un abonné ; et
un système de commande d'appel (314) couplé à la première interface, la deuxième interface et la base de données d'abonnés, le système de commande d'appel pouvant fonctionner pour recevoir un message pour une session d'appel par l'intermédiaire de la première interface depuis la CSCF et pour identifier une adresse de routage OCS et un identifiant d'abonné à partir du message,
le système de passerelle IMS (304) étant **caractérisé en ce que :**
le système de commande d'appel peut en outre fonctionner pour identifier une adresse de routage OCS correspondante dans la base de données d'abonnés, pour comparer l'adresse de routage OCS du message avec l'adresse de routage OCS de la base de données d'abonnés, pour valider l'adresse de routage OCS du message si l'adresse de routage OCS du message correspond à l'adresse de routage OCS de la base de données d'abonnés et pour transmettre une requête de facturation à l'OCS par l'intermédiaire de la deuxième interface sur la base de l'adresse de routage OCS validée.

2. Système de passerelle IMS (304) selon la revendication 1, dans lequel si l'adresse de routage OCS du message ne correspond pas à l'adresse de routage OCS de la base de données d'abonnés, alors le système de commande d'appel (314) peut fonctionner pour :
transmettre la requête de facturation à l'OCS (306-308) sur la base de l'adresse de routage OCS de la base de données d'abonnés (316).

3. Système de passerelle IMS (304) selon la revendication 1, dans lequel si la base de données d'abonnés (316) n'inclut pas d'adresse de routage OCS correspondante, alors le système de commande d'appel (314) peut fonctionner pour :
transmettre la requête de facturation à l'OCS (306-308) par l'intermédiaire de la deuxième interface (311) sur la base de l'adresse de routage OCS du message.

4. Système de passerelle IMS (304) selon la revendication 1, dans lequel si le message n'inclut pas d'adresse de routage OCS, alors le système de commande d'appel (314) peut fonctionner pour :
transmettre la requête de facturation à l'OCS (306-308) par l'intermédiaire de la deuxième interface (311) sur la base de l'adresse de routage OCS de la base de données d'abonnés (316).

5. Système de passerelle IMS (304) selon la revendication 1, dans lequel si ni la base de données d'abonnés (316) ni le message n'incluent d'adresse de routage OCS, alors le système de commande d'appel (314) peut fonctionner pour :
demander à un système de gestion de réseau (309) une adresse de routage OCS à jour ; et
transmettre la requête de facturation à l'OCS (306-308) par l'intermédiaire de la deuxième interface (311) sur la base de l'adresse de routage OCS mise à jour.

6. Procédé de fonctionnement d'un système de passerelle de sous-système multimédia IP, IMS, pour fournir une facturation en ligne dans un réseau IMS, le procédé comprenant :
réception d'un message pour une session d'appel depuis une fonction de commande de session d'appel, CSCF ;
et
identification d'une adresse de routage d'un système de facturation en ligne, OCS, et d'un identifiant d'abonné à partir du message ;
le procédé étant **caractérisé par** les étapes suivantes :
identification d'une adresse de routage OCS correspondante dans une base de données d'abonnés dotée d'une pluralité d'entrées ayant au moins une adresse de routage OCS correspondant à un abonné ;
comparaison de l'adresse de routage OCS du message avec l'adresse de routage OCS de la base de données d'abonnés ;
validation de l'adresse de routage OCS du message si l'adresse de routage OCS du message correspond à l'adresse de routage OCS de la base de données d'abonnés ; et
transmission d'une requête de facturation à un OCS sur la base de l'adresse de routage OCS validée.

7. Procédé selon la revendication 6, dans lequel si l'adresse de routage OCS du message ne correspond pas à l'adresse de routage OCS de la base de données d'abonnés, alors le procédé comprend en outre :
transmission de la requête de facturation à l'OCS sur la base de l'adresse de routage OCS de la base de données d'abonnés.

8. Procédé selon la revendication 6, dans lequel si la base de données d'abonnés n'inclut pas d'adresse de routage OCS correspondante, alors le procédé comprend en outre :
transmission de la requête de facturation à l'OCS sur la base de l'adresse de routage OCS du message.

9. Procédé selon la revendication 6, dans lequel si le message n'inclut pas d'adresse de routage OCS, alors le procédé comprend en outre :
transmission de la requête de facturation à l'OCS sur la base de l'adresse de routage OCS de la base de données d'abonnés.

10. Procédé selon la revendication 6, dans lequel si ni la base de données d'abonnés ni le message n'incluent d'adresse de routage OCS, alors le procédé comprend en outre :
demande à un système de gestion de réseau d'une adresse de routage OCS à jour ; et transmission de la requête de facturation à l'OCS sur la base de l'adresse de routage OCS mise à jour.
